# EUROPÄISCHE PATENTANMELDUNG

(11) **EP 2 145 794 A1**
(43) Veröffentlichungstag der Anmeldung: **20.01.2010**
(21) Anmeldenummer: 08012935.6
(22) Anmeldetag: 17.07.2008
(51) Int. Cl.: B60Q 1/26, B60Q 1/28, B60Q 1/44, B60Q 1/50, B60Q 1/56, B60R 13/10, G09F 13/04

(54) **Halterung für ein Kennzeichenschild**

(71) Anmelder: Sauer, Arno Martin, 83471 Berchtesgaden (DE); Moderegger, Bernd, 83471 Berchtesgaden (DE); Sievers, Adolf, 30966 Hemmingen (DE)
(72) Erfinder: Sauer, Arno Martin, 83471 Berchtesgaden (DE); Morderegger, Bernd, 83483 Bischofswiesen (DE); Sievers, Adolf, 30966 Hemmingen (DE); Sievers, Jörg, 30966 Hemmingen (DE); Böttjer, Peter, 30966 Hemmingen (DE)
(74) Vertreter: Hartz, Nikolai

(57) **Zusammenfassung**

Halterung (1) für ein Kennzeichenschild eines Fahrzeugs, die einen Rahmen (2) umfasst, der das Kennzeichenschild (nicht gezeigt) umgibt, und eine Fläche (3) auf der das Kennzeichenschild angeordnet wird, wobei der Rahmen (2) ein Leuchtmittel (nicht gezeigt) aufweist, das die Rahmenoberfläche beleuchtet, sowie elektrische Anschlüsse für das Bordnetz und eine elektronische Schaltung, die mit dem Bordnetz verbunden werden kann und den Betrieb des Leuchtmittels steuert, so dass einerseits ein Dauerleuchtbetrieb und/oder andererseits ein dynamischer Betrieb in Abhängigkeit eines externen Ereignisses gewählt werden kann.

## Beschreibung

### Fachgebiet der Erfindung

Die vorliegende Erfindung betrifft eine Halterung für ein Kennzeichenschild eines Fahrzeugs. Die vorliegende Erfindung betrifft auch ein Fahrzeug mit einer erfindungsgemäßen Halterung. Die Erfindung betrifft weiterhin die Verwendung der erfindungsgemäßen Halterung an einem Fahrzeug.

### Stand der Technik der Erfindung

Halterungen für ein Kennzeichenschild eines Fahrzeugs sind bekannt und dienen zur Befestigung eines Kennzeichenschildes an dem Fahrzeug. Zu diesem Zweck wird zunächst die Halterung am Fahrzeug befestigt. Die Halterung ist derart ausgestaltet, dass ein Kennzeichenschild einfach und sicher in die Halterung eingefügt und befestigt werden kann. Zur Abdeckung scharfer Kanten, die an den Rändern der Kennzeichenschilder vorliegen können, und aus ästhetischen Gründen weisen herkömmliche Halterungen einen Rahmen auf, der die Randbereiche des Kennzeichenschilds abdeckt. Der Rahmen der Halterung wird oft mit einer Beschriftung als Werbeaufdruck versehen.

Aus der DE 20 2005 011 270 ist eine Halterung für ein Kennzeichenschild bekannt, die zur Verbesserung der Lesbarkeit des Werbeaufdrucks vorschlägt, ein Mittel zur Beleuchtung der Beschriftung vorzusehen, das von einer autarken Energiequelle versorgt wird, die nicht oder nicht direkt bzw. ständig an das Bordnetz des Kraftfahrzeugs angeschlossen ist. Auf diese Weise soll erreicht werden, die Beschriftung auch bei ungünstigen Lichtverhältnissen hervorzuheben, so dass diese beispielsweise auch bei geparkten Fahrzeugen in der Dunkelheit sichtbar ist.

Die aus der DE 20 2005 011 270 bekannte Halterung für ein Kennzeichenschild hat jedoch den Nachteil, dass die Halterung eine autarke Energiequelle aufnehmen muss, so dass entweder eine in der Praxis unakzeptable Dimensionierung erforderlich wird oder aufgrund der geringen Leistung der Energiequelle ein häufiges Wechseln bzw. Aufladen der Energiequelle notwendig wird. Außerdem ist es mit der aus DE 20 2005 011 270 bekannten Halterung nicht möglich die Aufmerksamkeit des Betrachters in Abhängigkeit von bestimmten Verkehrssituationen zu steuern.

Es ist daher Aufgabe der Erfindung eine Halterung für ein Kennzeichenschild bereitzustellen, die geeignet ist eine codierte Nachricht von der Halterung zu einem Empfänger zu senden so dass diese Nachricht vom Empfänger entschlüsselt werden kann auch wenn der Empfängers aufgrund einer bestimmten Verkehrssituation eine von einer herkömmlichen Halterung bereitgestellte Nachricht nicht empfangen oder nicht entschlüsseln würde.

Diese Aufgabe wird mit einer Halterung gemäß Anspruch 1 gelöst. Die vorliegende Erfindung stellt eine Halterung für ein Kennzeichenschild eines Fahrzeugs bereit, die einen Rahmen umfasst, der das Kennzeichenschild umgibt, und eine Fläche auf der das Kennzeichenschild angeordnet wird, wobei der Rahmen ein Leuchtmittel aufweist, das die Rahmenoberfläche beleuchtet, sowie elektrische Anschlüsse für das Bordnetz und eine elektronische Schaltung, die mit dem Bordnetz verbunden werden kann und den Betrieb des Leuchtmittels steuert, so dass einerseits ein Dauerleuchtbetrieb und/oder andererseits ein dynamischer Betrieb in Abhängigkeit eines externen Ereignisses gewählt werden kann.

Die vorliegende Erfindung stellt außerdem ein Fahrzeug mit einer speziellen Halterung bereit, wobei die elektrischen Anschlüsse der Halterung an das Bordnetz des Fahrzeugs angeschlossen sind.

Schließlich stellt die vorliegende Erfindung die Verwendung einer erfindungsgemäßen Halterung bereit, zur Anzeige von Werbung an einem Fahrzeug.

Weitere vorteilhafte Ausgestaltungen sind Gegenstand der Unteransprüche.

### Kurze Beschreibung der Figuren

Figur 1 zeigt ein eine Draufsicht auf eine erfindungsgemäßen Halterung, ohne die Rahmenoberfläche, die beleuchtet wird.

Figur 2 zeigt eine perspektivische Ansicht einer erfindungsgemäßen Halterung, ebenfalls ohne die Rahmenoberfläche, die beleuchtet wird.

Figur 3 zeigt Ansichten einer Deckelleiste, die mit den Halterungen aus Figur 1 oder 2 kombiniert werden und als die Rahmenoberfläche, die beleuchtet wird, dienen kann.

### Detaillierte Beschreibung der Erfindung

Eine Halterung für ein Kennzeichenschild eines Fahrzeugs gemäß der vorliegenden Erfindung, umfasst einen Rahmen, der das Kennzeichenschild umgibt, und eine Fläche auf der das Kennzeichenschild angeordnet wird.

Die Halterungen mit dem Rahmen und der Fläche bestehen vorzugsweise zumindest teilweise aus Kunststoff, insbesondere aus thermoplastischem Kunststoff oder auch aus Metall, wie zum Beispiel Aluminium oder Edelstahl. Die Halterung wird an dafür vorgesehenen Bereichen eines Kraftfahrzeugs befestigt, vorzugsweise durch Schrauben.

Der Rahmen weist einen oder mehrere flächige Bereiche auf, deren Oberflächen erkennbar sind, wenn auch ein Kennzeichenschild, das in der Halterung montiert ist, erkennbar ist. In einer bevorzugten Ausführungsform liegen die flächigen Bereiche des Rahmens und des Kennzeichenschild in im Wesentlichen parallelen Ebenen. Der Rahmen erstreckt sich über die Randbereiche des Kennzeichenschildes und verhindert dadurch ein Herausfallen oder Verschieben des Kennzeichenschildes.

Der Rahmen umfasst weiterhin eine Fläche auf der das Kennzeichenschild angeordnet wird, wobei für diese Fläche jede Auflagefläche des Kennzeichenschildes geeignet ist, die das Kennzeichenschild in der gewünschten Orientierung fixiert, wenn die Halterung an dem Fahrzeug befestigt ist. Der Rahmen und die Fläche können einstückig oder mehrstückig ausgebildet sein.

Der Rahmen weist ein Leuchtmittel auf, das die Rahmenoberfläche beleuchtet. Das Leuchtmittel kann unterhalb oder oberhalb der Ebene der einen oder mehreren flächigen Bereiche vorgesehen werden, deren Oberflächen erkennbar sind, wenn auch ein Kennzeichenschild in der Halterung montiert ist. Wenn das Leuchtmittel unterhalb der Ebene vorgesehen wird, muss die Rahmenoberfläche zumindest teilweise transparent sein so dass Licht von unterhalb der Ebene durch die Oberfläche des Rahmens dringen kann. Die beleuchtete Rahmenoberfläche kann daher in einer bevorzugten Ausführungsform eine hinterleuchtete Folie sein. Insbesondere kann die Halterung eine Folieumfassen, die von einer oder mehreren LED-Leuchten hinterleuchtet wird. Der Rahmen weist bevorzugt wenigstens in Teilbereichen einen Hohlraum auf, der mit einer Deckelleiste abgedeckt wird. In dem Hohlraum kann das Leuchtmittel vorgesehen werden. Die Deckelleiste dient dann als Rahmenoberfläche, die beleuchtet wird. Alternativ kann die Deckelleiste aber auch als selbstleuchtende Folie ausgestaltet sein, wobei der Hohlraum die erforderliche Elektronik beherbergt.

In einer bevorzugten Ausführungsform ist eine Deckelleiste am unteren Rand der Halterung vorgesehen. Die Deckelleiste kann sich aber alternativ auch an anderen Rändern der Halterung befinden. An der Stelle der Deckelleiste kann auch ein anderes Deckelteil oder ein Deckelrahmen vorgesehen sein.

Der Rahmen weist außerdem elektrische Anschlüsse für das Bordnetz auf. Die Anschlüsse können eine lösbare Verbindung mit dem Bordnetz herstellen. Alternative sind auch Anschlüsse geeignet, die eine permanente Verbindung mit dem Bordnetz erlauben.

Der Rahmen umfasst weiterhin eine elektronische Schaltung, die mit dem Bordnetz verbunden werden kann und den Betrieb des Leuchtmittels steuert, so dass einerseits ein Dauerleuchtbetrieb und/oder andererseits ein dynamischer Betrieb in Abhängigkeit eines externen Ereignisses gewählt werden kann. Gemäß einer bevorzugten Ausführungsform kann die elektronische Schaltung der erfindungsgemäße Halterung einen Sensor aufweisen, der am Rahmen vorgesehen wird und zum Ein- bzw. Ausschalten des oder der Beleuchtungsmittel dient.

In einer bevorzugten Ausführungsform ist die Halterung **dadurch gekennzeichnet, dass** die beleuchtete Rahmenoberfläche eine Beschriftung aufweist so dass die codierte Nachricht ein Text ist, der von der Halterung zu einem Empfänger gesendet wird so dass dieser Text vom Empfänger gelesen werden kann auch wenn die Aufmerksamkeit des Empfängers aufgrund einer bestimmten Verkehrssituation einen von einer herkömmlichen Halterung bereitgestellten Text von dem Empfänger nicht empfangen oder nicht entschlüsselt werden würde.

In einer weiteren bevorzugten Ausführungsform ist die Beschriftung selbstleuchtend.

In einer besonderen Ausführungsform weist der Rahmen eine Deckelleiste auf, die als beleuchtete Oberfläche dient. Vorteilhafterweise ist die erfindungsgemäße Halterung nach **dadurch gekennzeichnet, dass** die Beschriftung im Bereich der Deckelleiste angeordnet ist.

Gemäß einer weiteren bevorzugten Ausführungsform betrifft die Erfindung eine Halterung für ein Kennzeichenschild eines Fahrzeugs bereit, die einen Rahmen umfasst, der das Kennzeichenschild umgibt, und eine Fläche auf der das Kennzeichenschild angeordnet wird, wobei der Rahmen ein Leuchtmittel aufweist, das die Rahmenoberfläche beleuchtet, sowie elektrische Anschlüsse für das Bordnetz und eine elektronische Schaltung, die mit dem Bordnetz verbunden werden kann und den Betrieb des Leuchtmittels steuert, so dass einerseits ein Dauerleuchtbetrieb und/oder andererseits ein dynamischer Betrieb in Abhängigkeit eines externen Ereignisses gewählt werden kann, wobei die Halterung einen Rahmen und einer Fläche zur Fixierung und rückseitigen Beleuchtung eines Schildes aufweist, um die Schildoberfläche in einer vorbestimmten Orientierung zu präsentieren, wenn der Rahmen an einem Fahrzeug befestigt ist, und darüber hinaus eine Beleuchtungseinrichtung mit einer Lichtaustrittsfläche, die an dem Rahmen vorgesehen wird, so dass das Kennzeichenschild von oben beleuchtet wird, wenn der Rahmen an dem Fahrzeug befestigt ist, wobei die Beleuchtungseinrichtung derart angeordnet ist, dass in keinem Punkt der Schildoberfläche, die von der Beleuchtungseinrichtung beleuchtet werden soll, der Winkel des Lichteinfalls auf die Oberfläche des Schildes 82° überschreitet, wobei dieser Winkel von demjenigen Rand der Lichtaustrittsfläche der Beleuchtungseinrichtung aus gemessen wird, der von der Oberfläche des Schildes am weitesten entfernt ist.

Dadurch wird einerseits die Oberfläche von einer relativ zur Oberfläche des Kennzeichenschildes fest angeordneten Beleuchtungseinrichtung mit einem bestimmten Lichteinfallswinkel beleuchtet. Andererseits leuchtet die Oberfläche des Schildes entweder durch eine hinter einem transparenten Kennzeichenschild vorgesehene Lichtquelle oder durch Verwendung eines selbstleuchtenden Kennzeichenschildes. Durch die Möglichkeit einer Beleuchtung mit verschiedenen Lichtquellen, einerseits über eine flächige vergleichsweise schwache Lichtquelle in der Schildebene und andererseits über eine punkt- bzw. linienförmige vergleichsweise starke Beleuchtungseinrichtung entsteht ein plastischer Eindruck, der die Erkennbarkeit des Kennzeichens insbesondere unter Mischlichtbedingungen gegenüber einem nur aus einer Richtung durch eine Lichtquelle beleuchteten Schild wesentlich erhöht. Der plastische Eindruck entsteht auch, aber nicht nur, wenn bereits eine erhabene Beschriftung vorliegt. Dies beruht darauf, dass die von oben beleuchtete Beschriftung und der leuchtende Hintergrund in verschiedenen Ebenen wahrgenommen werden. Dieser Eindruck bleibt auch in Gegenwart von Tageslicht erhalten, also unter Mischlichtbedingungen.

Durch Verwendung eines Sensors kann die Helligkeit der Beleuchtung des Kennzeichenschildes an jede Tageslichtsituation angepasst werden und auf diese Weise die Erkennbarkeit des Kennzeichens optimiert werden. Durch die Verwendung spezieller Mittel kann die Helligkeit der Beleuchtungseinrichtung angepasst werden, wenn ein selbstleuchtendes Schild in der Halterung fixiert wird. Die kombinierte Beleuchtung der Oberfläche eines Kennzeichenschildes erlaubt eine verbesserte Ästhetik des Kennzeichenschildes, insbesondere unter Mischlichtbedingungen, wenn das Kunstlicht der Beleuchtungseinrichtungen neben dem Tageslicht einen plastischen Eindruck von dem Kennzeichen vermitteln. Durch Anpassung der Lichtfarbe und Lichttemperatur kann die Ästhetik ebenfalls beeinflusst werden. Die Anordnung einer weiteren Lichtaustrittsfläche unterhalb des montierten Schildes beeinträchtigt die Ästhetik des Kennzeichenschildes nicht. Insbesondere, wenn die weitere Lichtaustrittsfläche nur zeitweise, beispielsweise bei Betätigung des Bremspedals, leuchtet, dann ist die Ästhetik des Kennzeichenschildes von der weiteren Lichtaustrittsfläche weitgehend unabhängig. Durch eine Fixierung der Position der Lichtquellen relativ zur Schildoberfläche wird eine Halterungsvorrichtung geschaffen, die im wesentlichen unabhängig wird von den Merkmalen des Bereichs eines Fahrzeugs an dem die Halterungsvorrichtung montiert wird. Dadurch wird ein hohes Maß an Freiheit bei der Gestaltung des Fahrzeugs geschaffen, wobei insbesondere auf spezielle Aussparungen in der Karosserie zur Aufnahme einer Beleuchtungseinrichtung und Bereitstellung einer entsprechend orientierten Anbringungsfläche verzichtet werden kann.

Durch die Verwendung von mehreren Lichtquellen wird darüber hinaus die Ausfallsicherheit bei der Beleuchtung des Kennzeichens erhöht.

Die vorliegende Erfindung betrifft auch ein Fahrzeug mit einer erfindungsgemäßen Halterung, wobei die elektrischen Anschlüsse der Halterung an das Bordnetz des Fahrzeugs angeschlossen sind. Vorteilhafterweise kann die Halterung für das vordere Kennzeichenschild vorgesehen sein und das Leuchtmittel die Oberfläche des Rahmens mit weißem Licht beleuchten. In einer weiteren bevorzugten Ausführungsform kann die Halterung für das hintere Kennzeichenschild vorgesehen sein und das Leuchtmittel die Oberfläche des Rahmens mit rotem Licht beleuchten.

Die erfindungsgemäße Halterung kann insbesondere zur Anzeige von Werbung an einem Fahrzeug verwendet werden. Die Werbung kann mit der Halterung des vorderen Kennzeichenschildes anzeigt werden und im Dauerbetrieb leuchten. Außerdem kann die Werbung mit der Halterung des hinteren Kennzeichenschildes anzeigt werden und beim Betätigen des Bremspedals aufleuchten.

In einer weiteren Ausführungsform besteht die codierte Nachricht, die von der Halterung zu einem Empfänger gesendet wird in einer Warnung über den Zustand des Fahrzeugs oder des Fahrers, beispielsweise dass der Fahrer nicht angeschnallt ist. Durch einen Sensor ermittelt das Fahrzeug, ob ein Fahrzeuginsasse den Sicherheitsgurt angelegt hat. Sollte dies bei einem Insassen nicht der Fall sein, so wird der diese Nachricht durch ein Warnblinken des Rahmens der Halterung an einen Empfänger übermittelt, der mit dem Rahmen in Sichtkontakt steht.

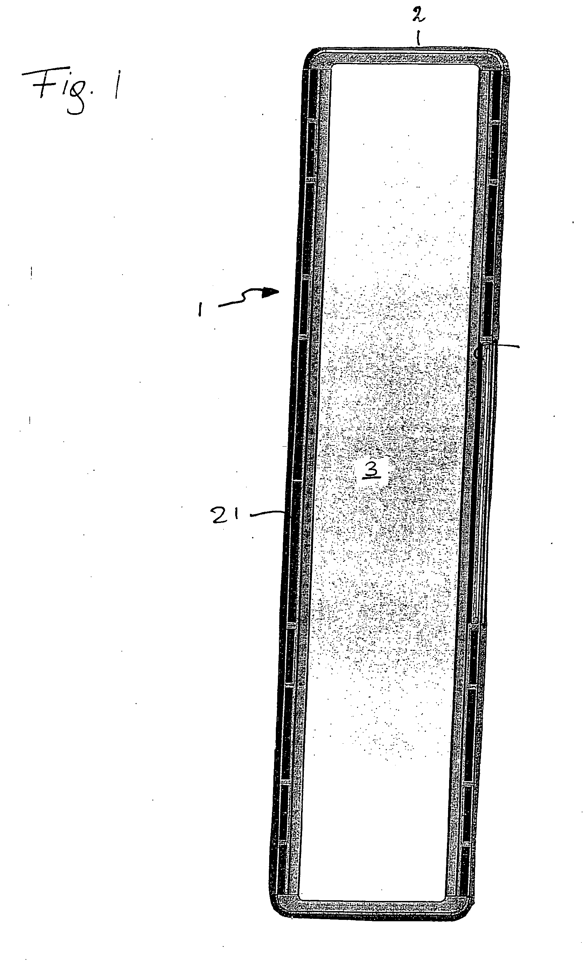

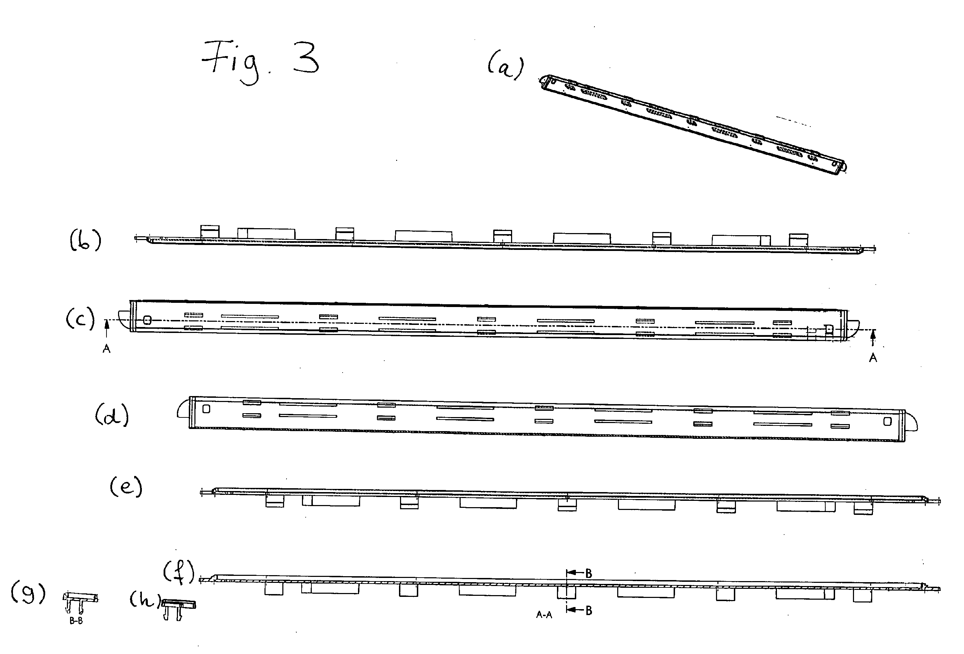

Wie in Figur 1 gezeigt, umfasst eine Halterung 1 einen Rahmen 2, der das Kennzeichenschild (nicht gezeigt) umgibt, und eine Fläche 3 auf der das Kennzeichenschild angeordnet wird. In der in Figur 1 gezeigten Ausführungsform wird das Leuchtmittel, das der Rahmen aufweist, in einem Hohlraum 21 der unteren Längsseite vorgesehen. Das Leuchtmittel (nicht gezeigt) beleuchtet die Rahmenoberfläche von innen aus dem Hohlraum. Dazu kann eine transparente Deckelleiste, wie in Figur 3 gezeigt, verwendet werden.

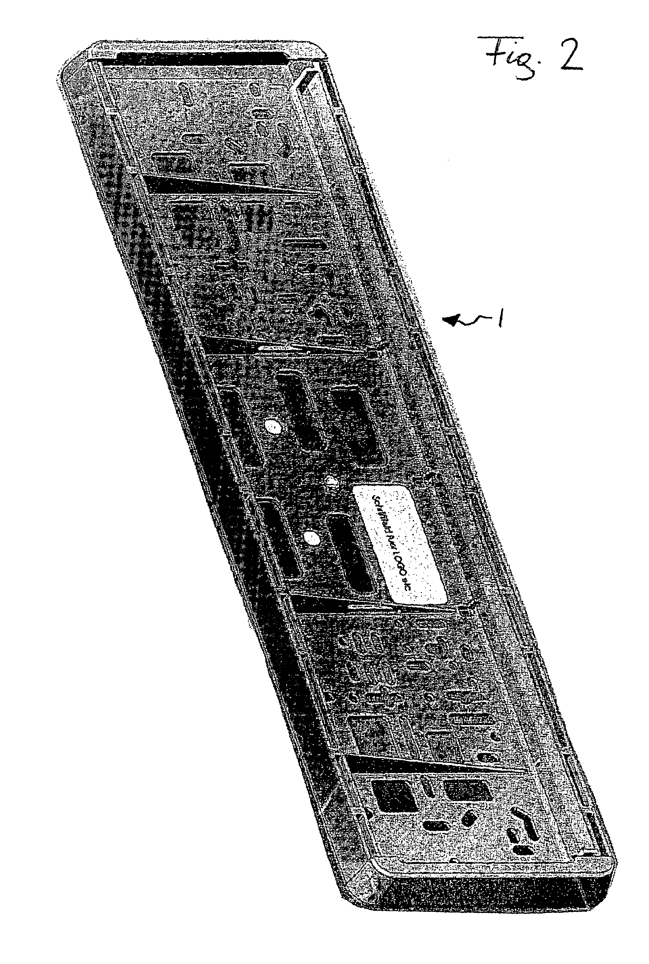

Figur 2 zeigt eine perspektivische Ansicht einer erfindungsgemäßen Halterung 1, bei der das Leuchtmittel ebenfalls in einem Hohlraum 21 vorgesehen wird.

Figur 3 (a) bis (h) zeigt Ansichten einer Deckelleiste, die mit den Halterungen aus Figur 1 und 2 kombiniert werden und als die Rahmenoberfläche, die beleuchtet wird, dienen kann. In Fig 3(a) ist eine perspektivische Darstellung einer transparenten Deckelleiste dargestellt, die dazu bestimmt ist den Hohlraum der unteren Längsseite eines Rahmens zu verschließen so dass das Leuchtmittel die Deckelleiste als eine Rahmenoberfläche von innen aus dem Hohlraum beleuchten kann. Figur 3(b) zeigt eine Seitenansicht der Deckelleiste, die anhand von Auskragungen an der Halterung verankert werden kann. Die Figuren 3(c) und (d) zeigen Draufsichten auf eine Deckelleiste. Figur 3(e) zeigt eine Seitenansicht auf eine Deckelleiste. Figur 3(f) zeigt einen Schnitt durch eine Seitenansicht entlang der Ebene A-A, die in Figur 3(c) dargestellt ist. Figur 3(g) zeigt einen Schnitt durch eine Seitenansicht entlang der Ebene B-B, die in Figur 3(f) gezeigt wird. Figur 3(h) zeigt eine Seitenansicht einer Deckelleiste.

## Patentansprüche

1. Halterung für ein Kennzeichenschild eines Fahrzeugs, die einen Rahmen umfasst, der das Kennzeichenschild umgibt, und eine Fläche auf der das Kennzeichenschild angeordnet wird, wobei der Rahmen ein Leuchtmittel aufweist, das die Rahmenoberfläche beleuchtet, sowie elektrische Anschlüsse für das Bordnetz und eine elektronische Schaltung, die mit dem Bordnetz verbunden werden kann und den Betrieb des Leuchtmittels steuert, so dass einerseits ein Dauerleuchtbetrieb und/oder andererseits ein dynamischer Betrieb in Abhängigkeit eines externen Ereignisses gewählt werden kann.

2. Halterung nach Anspruch 1, **dadurch gekennzeichnet, dass** die beleuchtete Rahmenoberfläche eine Beschriftung aufweist.

3. Halterung nach einem der Ansprüche 1 oder 2, wobei die Beschriftung selbstleuchtend ist.

4. Halterung nach einem der Ansprüche 1 oder 2, wobei die beleuchtete Rahmenoberfläche eine hinterleuchtete Folie ist.

5. Halterung nach Anspruch 4, wobei die Folie von einer oder mehreren LED-Leuchten hinterleuchtet wird.

6. Halterung nach einem der vorstehenden Ansprüche, wobei der Rahmen eine Deckelleiste aufweist, die als beleuchtete Oberfläche dient.

7. Halterung nach Anspruch 6, **dadurch gekennzeichnet, dass** die Beschriftung im Bereich der Deckelleiste angeordnet ist.

8. Halterung nach einem der vorhergehenden Ansprüche, wobei der die elektronische Schaltung einen Sensor aufweist, der am Rahmen vorgesehen wird und zum Ein- bzw. Ausschalten des oder der Beleuchtungsmittel dient.

9. Fahrzeug mit einer Halterung gemäß einem der Ansprüche 1 bis 8, wobei die elektrischen Anschlüsse der Halterung an das Bordnetz des Fahrzeugs angeschlossen sind.

10. Fahrzeug nach Anspruch 9, wobei die Halterung für das vordere Kennzeichenschild vorgesehen ist und das Leuchtmittel die Oberfläche des Rahmens mit weißem Licht beleuchtet.

11. Fahrzeug nach Anspruch 9, wobei die Halterung für das hintere Kennzeichenschild vorgesehen ist und das Leuchtmittel die Oberfläche des Rahmens mit rotem Licht beleuchtet.

12. Verwendung einer Halterung gemäß einem der Ansprüche 1 bis 8 zur Anzeige von Werbung an einem Fahrzeug.

13. Verwendung gemäß Anspruch 12, wobei die Werbung mit der Halterung des vorderen Kennzeichenschildes anzeigt wird und im Dauerbetrieb leuchtet.

14. Verwendung gemäß Anspruch 12, wobei die Werbung mit der Halterung des hinteren Kennzeichenschildes anzeigt wird und beim Betätigen des Bremspedals aufleuchtet.
